# EUROPÄISCHE PATENTSCHRIFT

(11) **EP 3 107 272 B1**
(45) Veröffentlichungstag und Bekanntmachung des Hinweises auf die Patenterteilung: **08.04.2020**
(21) Anmeldenummer: 16175079.9
(22) Anmeldetag: 17.06.2016
(51) Int. Cl.: H04M 1/60, H04M 1/725

(54) **VERFAHREN ZUR VERWALTUNG EINER KOPPLUNG EINES MOBILEN ELEKTRONISCHEN ZUBEHÖRGERÄTES, INSBESONDERE EINES HEADSETS, MIT EINEM ELEKTRONISCHEN ENDGERÄT**
METHOD FOR MANAGING A COUPLING OF A MOBILE ELECTRONIC ACCESSORY DEVICE, IN PARTICULAR A HEADSET, WITH AN ELECTRONIC TERMINAL
PROCÉDÉ POUR LA GESTION D'UN COUPLAGE D'UN APPAREIL ACCESSOIRE ÉLECTRONQUE MOBILE, PLUS PARTICULIÈREMENT D'UN CASQUE, AVEC UN TERMINAL ÉLECTRONIQUE

(30) Priorität: 19.06.2015 DE 102015109825
(43) Veröffentlichungstag der Anmeldung: 21.12.2016
(73) Patentinhaber: Deutsche Telekom AG, 53113 Bonn (DE)
(72) Erfinder: Wang, Hao, 53175 Bonn (DE); Burkert, Stefan, 53173 Bonn (DE)
(74) Vertreter: Braun-Dullaeus Pannen Emmerling Patent- & Rechtsanwaltspartnerschaft mbB

(56) Entgegenhaltungen:
- WO-A1-2004/086735
- US-A1- 2012 096 111

## Beschreibung

Die Erfindung betrifft ein Verfahren zur Verwaltung einer Kopplung eines mobilen elektronischen Zubehörgerätes, insbesondere eines Headsets, mit einem Smartphone, über eine drahtlose Kurzstreckenverbindung, insbesondere über Bluetooth. Die Erfindung betrifft auch ein System zur Umsetzung des Verfahrens.

Bei solchen Zubehörgeräten handelt es sich insbesondere um Headsets oder andere Freisprecheinrichtungen mit Mikrofon und Lautsprecher oder um intelligente Armbänder. Auch eine Multimedia-Einheit eines Kraftfahrzeugs ist als Zubehörgerät denkbar.

Damit solche Zubehörgeräte in Verbindung mit einem Endgerät, beispielsweise einem Mobiltelefon oder Smartphone (nachfolgend zusammenfassend "Smartphone"), betrieben werden können, müssen die beiden Geräte miteinander gekoppelt sein. Bei der Kopplung, auch "Pairing" genannt, werden die beiden zu koppelnden Geräte miteinander bekannt gemacht. Dies kann durch eine Nutzereingabe begleitet werden, beispielsweise durch eine Auswahl des zu gekoppelten Zubehörgeräts auf dem Display des Endgeräts, gegebenenfalls in Verbindung mit einem dem Zubehörgerät zugeordneten Kennwort. Unter dem Begriff Kopplung ("Pairing") wird im Rahmen der vorliegenden Erfindung sowohl der Vorgang der Kopplung, bei dem die beiden Geräte miteinander gekoppelt werden, als auch der Zustand, in dem die beiden Geräte miteinander gekoppelt sind, bezeichnet.

Kopplungsversuche können jedoch Scheitern, insbesondere wenn zwischen den Geräten keine Kompatibilität herrscht. Auch scheitert die Kopplung häufig, wenn die Kompatibilität der Geräte zwar dem Grunde nach möglich ist, jedoch die Betriebssysteme oder Firmware der einzelnen Geräte nicht aufeinander abgestimmt oder nicht auf dem neuesten Stand sind. Auch scheitert die Kopplung, wenn der Nutzer sie nicht korrekt einleitet.

Aus der US 2012/0096111 A1 ist es bekannt, dass sich das Smartphone mit dem Internet verbindet, um über die Datenbank des Herstellers Software Updates der Firmware für das angeschlossene oder anzuschließende Zubehörgerät herunter zu laden.

Aus der WO 2004/086735 A1 ist ein Verfahren zum Konfigurieren eines mobilen drahtlosen Kommunikationssystems in einem Fahrzeug zum Betrieb mit einer mobilen drahtlosen Kommunikationsvorrichtung bekannt, die eine Mehrzahl von Leistungscharakteristika aufweist, wobei das drahtlose Kommunikationssystem ein Steuermodul und eine Mehrzahl von Betriebseinstellungen hat.

Aufgabe der vorliegenden Erfindung ist es nun, die Kopplung solcher Geräte insbesondere über eine Bluetooth Schnittstelle verbessert zu verwalten und damit sicherzustellen, dass die zur Kopplung vorgesehenen Geräte optimal mit dem Endgerät verwendet werden können. Die Nutzerfreundlichkeit soll dabei möglichst hoch sein.

Die der Erfindung zugrunde liegende Aufgabe wird gelöst durch ein Verfahren nach Anspruch 1 sowie ein System nach Anspruch 9; bevorzugte Ausgestaltungen ergeben sich aus den Unteransprüchen und der nachfolgenden Beschreibung.

Das erfindungsgemäße Verfahren dient zur Verwaltung einer Kopplung eines mobilen elektronischen Zubehörgerätes, insbesondere eines Headsets, mit einem, insbesondere mobilen, elektronischen Endgerät, wie einem Smartphone, über eine drahtlose standardisierte Kurzstreckenverbindung, insbesondere über Bluetooth. Dabei ist auf dem Endgerät eine Nutzeranwendung installierbar oder bereits installiert, die nach erfolgreicher Kopplung auf das gekoppelte Zubehörgerät zugreifen kann.

Erfindungsgemäß läuft auf dem Endgerät eine Monitoring- respektive Aktivierungsanwendung ("Enabler") ab, die über eine Datenfernverbindung, insbesondere über das Internet, mit einer speziellen Datenbank in Verbindung steht. Diese Datenbank kann Produktinformationen, insbesondere Metadaten zu Smartphones, Zubehörgeräten sowie Nutzeranwendungen (Apps), enthalten. Sie läuft auf einem zentralen Server, der insbesondere über das Internet erreichbar ist. Metadaten für Smartphones können das Modellkennzeichnungen, die Version der Firmware und/oder des Betriebssystems und die laufende Bluetooth Version sein. Metadaten der Zubehörgeräten können auch Modellkennzeichnungen und die Version der Firmware sein. Metadaten der Apps können die App-ID und die App Version sein. Die Besonderheit der Erfindung liegt darin, dass sie eine flexible und automatische Möglichkeit bereitstellt, Zubehörgeräte und Smartphones zu koppeln.

In der Datenbank sind mit den Metadaten Kompatibilitätsinformationen hinterlegt, welche Informationen zur Kompatibilität zwischen Modellen von Endgeräten, Modellen von Zubehörgeräten und Nutzeranwendungen umfassen. Die Monitoringanwendung hat Zugriff auf diese Kompatibilitätsinformation und überprüft anhand der bezogenen Kompatibilitätsinformationen, insbesondere der Metadaten, die Kompatibilität zwischen dem Endgerät (Smartphone), eines gekoppelten oder zu koppelnden Zubehörgeräts und der installierten oder zu installierenden Nutzeranwendung. Basierend auf den Metadaten kann überprüft werden, welche App zu welchem Smartphone und welchem Zubehörgerät "passt", respektive im negativen Falle "nicht passt". Die Information aus der Datenbank bezüglich des "Passens/Nichtpassens" kommt aus einer zuverlässigen Quelle, kann aber von Region zu Region etwas unterschiedlich sein. So können bestimmte Apps und/oder Zubehörgeräte in Deutschland begehrter sein als in anderen Ländern.

Eine weitere Besonderheit der Erfindung liegt in der Monitoringanwendung, mithin dem "Enabler", der auf dem Smartphone installiert ist und dort im Hintergrund läuft. Vorteilhafterweise untersucht der der "Enabler" anhand der in der Datenbank gespeicherten Metainformation die Kompatibilität der drei an der Kopplung beteiligten Hauptkomponenten, nämlich dem Endgerät, dem Zubehörgerät und der Nutzeranwendung. Anhand des Untersuchungsergebnisses können dann weitere Schritte veranlasst werden. Tritt ein Fehler auf, kann der "Enabler" versuchen, diesen zu beheben oder er veranlasst den Nutzer zu entsprechenden Schritten. Auf der anderen Seite kann der "Enabler" in der Datenbank nach besonders hilfreichen Apps suchen, die die Funktion des gekoppelten Zubehörgerät unterstützen. Die zu bevorzugenden Apps können regional unterschiedlich sein. Auf der anderen Seite kann der "Enabler" auch das beste Zubehörgerät für eine schon installierte Applikation aufsuchen und dem Nutzer präsentieren.

Die Kompatibilitätsinformationen respektive die Metadaten sind bibliothekartig in der Datenbank hinterlegt. Hierdurch kann die Monitoringanwendung auf in den Kompatibilitätsinformationen hinterlegte Kenntnisse zugreifen, ob und unter welchen Bedingungen die drei vorgenannten Hauptkomponenten miteinander betrieben werden können. Sollten sich die tatsächlich vorliegenden Bedingungen von den in den Kompatibilitätsinformationen hinterlegten Bedingungen nun unterscheiden, so kann der Kopplungsversuch abgebrochen werden oder es können Maßnahmen eingeleitet werden, die eine Kopplung dennoch erfolgreich abschließen lassen. Der Nutzer kann auch angeleitet werden, welche Maßnahmen er vorzunehmen hat. Die Maßnahmen können ebenfalls in den Kompatibilitätsinformationen enthalten sein.

Vorzugsweise wird die Monitoringanwendung zu einem Abgleich mit den Kompatibilitätsinformationen veranlasst, sobald eine Kopplung eingeleitet wird. In diesem Fall kann festgestellt werden, ob und unter welchen Bedingungen die Kopplung erfolgreich verlaufen wird. Gegebenenfalls können einleitende Schritte durchgeführt werden, die die Kopplung unterstützen.

In einer anderen Ausgestaltung kann die Monitoringanwendung zum Abgleich mit den Kompatibilitätsinformationen veranlasst werden, wenn eine Kopplung scheitert, also insbesondere der Vorgang der Kopplung (Kopplungsversuch) nicht erfolgreich abgebrochen wird oder eine vorhandene Kopplung unerwartet unterbrochen wird. In diesem Fall kann ein Fehlerbericht, insbesondere umfassend Metainformation des Mobiltelefons, des Zubehörgeräts und/oder der Nutzeranwendung von der Monitoringanwendung, an die Datenbank übersendet werden. Eine Anleitung zum Beheben der Fehlkopplung, die in den Kompatibilitätsinformationen enthalten ist, kann an den Nutzer ausgegeben werden.

Die Monitoringanwendung kann ferner zu einem Abgleich mit den Kompatibilitätsinformationen veranlasst werden, wenn eine Installation einer Nutzeranwendung auf dem Endgerät eingeleitet wird. Dann wird insbesondere überprüft, ob die neu zu installierende Nutzeranwendung kompatibel zum Endgerät und zum Zubehörgerät ist. Falls die Kompatibilität nicht gegeben ist, kann anhand der Kompatibilitätsinformationen überprüft werden, ob beispielsweise durch eine Aktualisierung der Firmware des Zubehörgeräts oder des Endgeräts die Kompatibilität hergestellt werden kann. Falls ja, wird diese Aktualisierung automatisch veranlasst.

Die Monitoringanwendung kann Kompatibilitätsinformationen untersuchen und dabei eine noch nicht installierte Nutzeranwendung ermitteln, die kompatibel ist zum Endgerät und dem gekoppelten oder des zur Kopplung vorgesehenen Zubehörgeräts. Die Monitoringanwendung kann eine Installationsempfehlung zur Installation der ermittelten und Nutzeranwendung an den Nutzer ausgeben.

Vorzugsweise kann die Monitoringanwendung die Kompatibilitätsinformation untersuchen und ein noch nicht gekoppeltes Zubehörgerät ermitteln, welches kompatibel ist zum Endgerät und zu einer installierten oder zur Installation vorgesehenen Nutzeranwendung. Eine Kopplungsempfehlung zur Kopplung des ermittelten Zubehörgeräts kann an den Nutzer ausgegeben werden.

Die beiden vorgenannten Alternativen bieten nun eine Möglichkeit, dem Nutzer stets neue Möglichkeiten vorzuschlagen, wie er sein Endgerät optimal erweitern kann, nämlich einerseits, hinsichtlich geeigneter Zubehörgeräte, die kompatibel sind zu installierten oder zur Installation vorgesehenen Anwendung, oder anderseits, hinsichtlich geeigneter Nutzeranwendungen, die kompatibel sind, zu bereits gekoppelten oder zur Kopplung vorgesehenen Zubehörgeräten. Der Zugriff auf die Datenbank und die darin hinterlegten Kompatibilitätsinformationen eröffnet dabei eine unzählige Anzahl von Möglichkeiten, das Endgerät gemeinsam mit dem Zubehörgerät optimal zu ergänzen.

Die Erfindung wird anhand der Figuren nachfolgend näher erläutert. Es zeigen:
- **Figur 1**: ein System zur Umsetzung des Verfahrens
- **Figur 2**: eine erfindungsgemäße Schrittfolge.

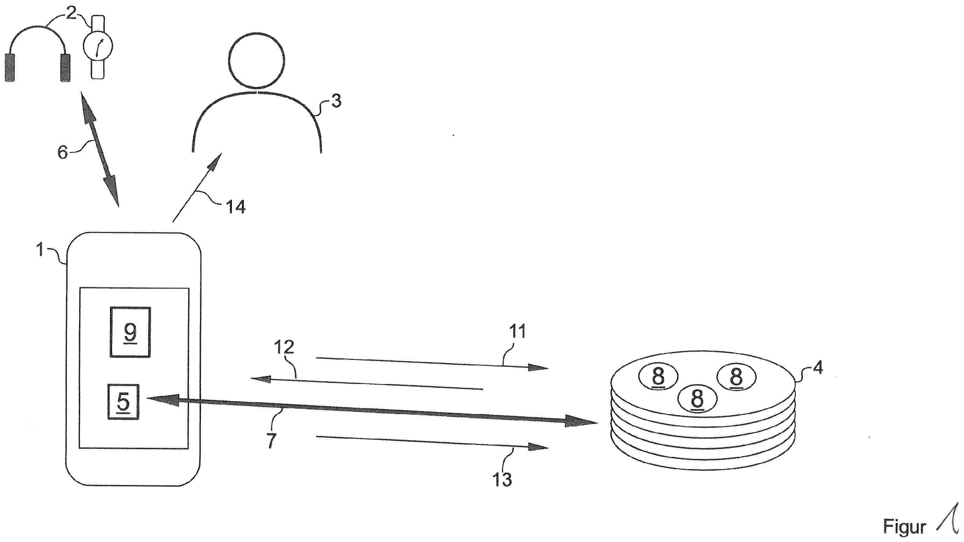

Figur 1 zeigt ein Mobiltelefon 1 als elektronisches Endgerät, auf welchem eine Nutzeranwendung 9, beispielsweise eine Telefonanwendung oder ein Computerspiel abläuft. Über eine Datenverbindung in Form einer Kurzstreckenverbindung 6, hier eine Bluetoothverbindung, ist ein Zubehörgerät 2, beispielsweise ein Headset oder ein elektronisches Armband, mit dem Mobiltelefon 1 gekoppelt. Die Kopplung zwischen dem Mobiltelefon 1 und dem Zubehörgerät 2 wird über eine Monitoringanwendung 5 überwacht. Die Monitoringanwendung 5 steht über eine Internetverbindung 7 mit einer zentralen Datenbank 4 in Verbindung. Die zentrale Datenbank 4 umfasst eine Vielzahl von Kompatibilitätsinformationen 8 respektive Metainformationen, auf welche die Monitoringanwendung 5 zugreifen kann. Eine Kompatibilitätsformation umfasst dabei Angaben über die Kompatibilität von unterschiedlichen Modellen von Endgeräten, Zubehörgeräten und Nutzeranwendungen 9. Diese Informationen können sehr detailliert gegliedert sein. So kann beispielsweise eine Kompatibilitätsinformation umfassen, dass eine vorgegebene Nutzeranwendung 5 mit dem vorhandenen Mobiltelefon kompatibel ist und auch kompatibel ist zu einem gekoppelten Headset, aber nur, wenn auf dem Headset die neueste Firmware installiert ist. Für ältere Aktualisierungszustände besteht hingegen keine Kompatibilität zwischen dem Endgerät und dem Headset.

Zunächst sind das Endgerät 1 und das Zubehörgerät 2 noch nicht miteinander gekoppelt. Wird nun eine Kopplung des Zubehörgeräts 2 eingeleitet, so werden vom Zubehörgerät 2 an das Endgerät 1 Information über das Modell des zu koppelnden Zubehörgeräts 2 und damit an die Monitoringanwendung übermittelt. Hierauf sendet die Monitoringanwendung 5 eine Anfrage 11 zur Übermittlung von Kompatibilitätsinformationen 8 bezüglich des zu koppelnden Zubehörgeräts 2. Diese angeforderten Kompatibilitätsinformationen 8 werden im Schritt 12 von der Datenbank 4 an die Monitoringanwendung 5 übermittelt. Die Monitoringanwendung 5 überprüft nun, ob eine Kompatibilität zwischen den auf dem Endgerät 1 installierten Nutzeranwendungen 9, die auf das Zubehörgerät zugreifen, beispielsweise eine Telefonanwendung, und dem Zubehörgerät 2 gegeben ist. Falls ja, erfolgt die Kopplung. Eine Aktualisierung der Nutzeranwendung 9 ist nicht erforderlich. Sollte sich ergeben, dass die Kompatibilität zwischen Endgerät 1, Zubehörgerät 2 und Nutzeranwendung 9 nicht gegeben ist, so kann einerseits ein Abbruch der Kopplung erfolgen. Dieser Abbruch kann anhand einer Fehlermeldung 13 an die Datenbank übermittelt werden, die daraufhin aktualisiert wird. Andererseits kann eine Aktualisierung der Nutzeranwendung 9 vorgenommen werden, da die Kompatibilitätsinformationen erkennen lassen, dass die Nutzeranwendung 9 nur in einer aktualisierten Version kompatibel ist zu Endgerät 1 und Zubehörgerät 2.

In einer alternativen Ausgestaltung wird eine Anleitung an den Nutzer 3 ausgegeben, wie er in den Kopplungsvorgang eingreifen kann, so dass aufgrund nicht gegebener oder mangelnder Kompatibilität dennoch eine Kopplung erzielt werden kann. Hier kann er beispielsweise dazu über eine Ausgabemittel des Endgeräts aufgefordert werden, gewisse Einstellungen am Zubehörgerät, am Endgerät oder der Nutzeranwendung vorzunehmen.

Alternativ muss der Abgleich nicht automatisch erfolgen, wenn eine Kopplung eingeleitet wird. Der Abgleich mit den Kompatibilitätsinformationen kann erst dann eingeleitet werden, wenn eine Kopplung scheitert. Wie bereits ausgeführt, kann dann der Fehlerbericht, der insbesondere Metainformationen des Mobiltelefons und des Zubehörgeräts umfasst, von der Monitoringanwendung an die Datenbank übersendet werden. Weiter alternativ kann die Veranlassung zum Abgleich auch dann erfolgen, wenn eine Installation einer Nutzeranwendung eingeleitet wird, insbesondere einer solchen Nutzeranwendung, die auf gekoppelte Zubehörgeräte zugreifen kann.

Auch im laufenden Betrieb kann die Monitoringanwendung, insbesondere in regelmäßigen Abständen, die Kompatibilitätsinformation dahingehend untersuchen, ob noch nicht installierte Nutzeranwendungen verfügbar sind, die kompatibel sind zum Endgerät und zu dem gekoppelten Zubehörgerät bzw. zu einem zur Kopplung vorgesehenen Zubehörgeräts. Anschließend kann eine Installationsempfehlung 14 zur Installation der ermittelten Nutzeranwendung an den Nutzer ausgegeben werden. Eine andere Möglichkeit ist, dass die Monitoringanwendung insbesondere in regelmäßigen Abständen prüft, ob neuartige Zubehörgeräte verfügbar sind, die aber noch nicht gekoppelt sind. Solche Zubehörgeräte sind kompatibel zum Endgerät und zu einer installierten oder zur Installation vorgesehenen Nutzeranwendung. Solche Informationen lassen sich den Kompatibilitätsinformationen entnehmen. Anschließend wird eine Kopplungsempfehlung zur Kopplung des ermittelten Zubehörgeräts an den Nutzer ausgegeben.

Im Falle eines Scheiterns eines Kopplungsversuches kann die Monitoringanwendung auch selbstständig Maßnahmen ergreifen, um die Kopplung erfolgreich abzuschließen. Die Kompatibilitätsinformationen können dabei Fehlerbehebungsinformationen umfassen, die der Monitoringanwendung vorgibt, konkrete Maßnahmen zur Behebung von Fehlern durchzuführen.

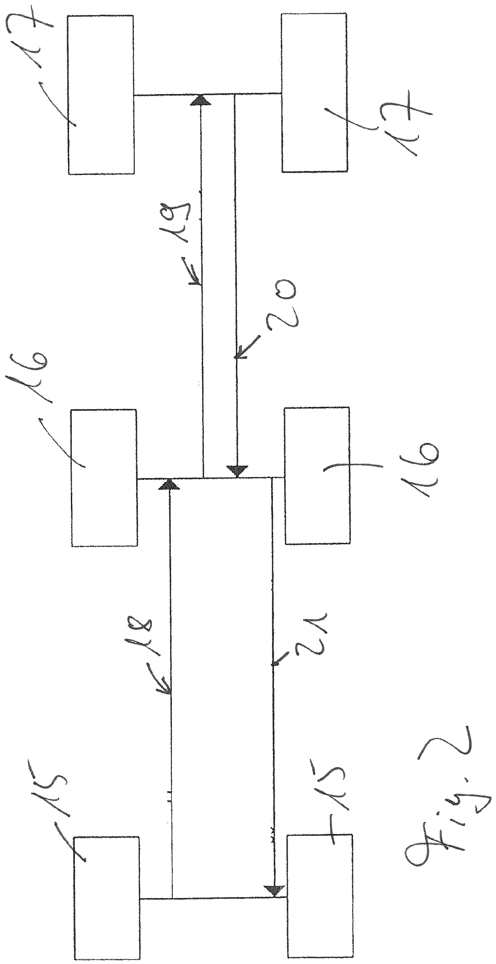

In Figur 2 ist eine Schrittsequenz dargestellt, wobei die Einheit 15 das Smartphone, die Einheit 16 den auf dem Smartphone laufenden "Enabler" und die Einheit 17 die Datenbank darstellt. In einem ersten Schritt 18 wird die Nutzeranwendung (App) installiert und/oder das Zubehörgerät installiert. Nachfolgend wird in Schritt 19 über das Internet eine HTTPS Anfrage an die zentrale Datenbank gestellt, wobei die Anfrage Metainformation zu Smartphones, Zubehörgeräten und/oder Apps enthalten kann. In Schritt 20 wird seitens der Datenbank Metainformation bezüglich der App und/oder des Zubehörgerätes zurück geschickt. In Schritt 21 ruft der Enabler entweder die geeignete API (Programmierschnittstelle) auf, um beispielsweise die App auf den neusten Stand zu bringen, oder er schickt Informationen als Hilfestellung an den Nutzer.

### Bezugszeichenliste

- 1: Mobiltelefon
- 2: Headset / elektronisches Armband
- 3: Nutzer
- 4: Datenbank
- 5: Monitoringanwendung
- 6: Kurzstreckenverbindung
- 7: Internetverbindung
- 8: Kompatibilitätsinformationen
- 9: Nutzeranwendung

- 11: Anfrage zur Übermittlung von Kompatibilitätsinformationen
- 12: Übermittlung von Kompatibilitätsinformationen
- 13: Übermittlung eines Fehlerberichts
- 14: Ausgabe einer Installations- oder Kopplungsempfehlung an den Nutzer
- 15: Smartphone
- 16: Enabler
- 17: Datenbank

- 18 - 21: Verfahrensschritte

## Patentansprüche

1. Verfahren zur Verwaltung einer Kopplung eines mobilen elektronischen Zubehörgeräts (2) mit einem Smartphone (1) über eine drahtlose Kurzstreckenverbindung (6),
wobei eine Nutzeranwendung (9) auf dem Smartphone (1) installiert wird, die nach der Kopplung auf das gekoppelte Zubehörgerät (2) zugreifen kann,
wobei im Smartphone (1) eine Monitoringanwendung (5) läuft, die über eine Datenfernverbindung (7) umfassend das Internet mit einer auf einem zentralen Server realisierten zentralen Datenbank (4) in Verbindung steht,
**dadurch gekennzeichnet, dass** die Datenbank eine Vielzahl von Kompatibilitätsinformationen (8) umfasst,
wobei eine Kompatibilitätsinformation Angaben über die Kompatibilität von unterschiedlichen Modellen von Smartphones (1), Modellen von Zubehörgeräten (3) und Nutzeranwendungen (9) hinterlegt sind,
wobei die Monitoringanwendung (5) auf die Kompatibilitätsinformation (8) zugreift, um die Kompatibilität zwischen dem Smartphone (1), einem gekoppelten oder zu koppelnden Zubehörgerät (3) und einer installierten oder zu installierenden Nutzeranwendung (9) zu überprüfen.

2. Verfahren nach dem vorherigen Anspruch,
wobei die Monitoringanwendung (5) zu einem Abgleich mit den Kompatibilitätsinformationen (8) veranlasst wird, wenn eine Kopplung eingeleitet wird.

3. Verfahren nach einem der vorherigen Ansprüche,
wobei die Monitoringanwendung (5) zu einem Abgleich mit den Kompatibilitätsinformationen (8) veranlasst wird, wenn eine Kopplung scheitert.

4. Verfahren nach Anspruch 3,
wobei im Falle des Scheiterns ein Fehlerbericht (13) umfassend Metainformationen des Smartphones (1) und des Zubehörgeräts (2), von der Monitoringanwendung (5) an die Datenbank übersendet werden.

5. Verfahren nach Anspruch 3 oder 4,
wobei eine Anleitung zum Beheben der Fehlkopplung an den Nutzer (3) ausgegeben wird.

6. Verfahren nach einem der vorherigen Ansprüche,
wobei die Monitoringanwendung (5) zu einem Abgleich mit den Kompatibilitätsinformationen (8) veranlasst wird, wenn eine Installation einer Nutzeranwendung (9) auf dem Smartphone (1) eingeleitet wird.

7. Verfahren nach einem der vorherigen Ansprüche,
wobei die Monitoringanwendung (5) die Kompatibilitätsinformationen (8) untersucht und eine noch nicht installierte Nutzeranwendung (9) ermittelt, welche kompatibel zum Smartphone (1) und dem gekoppelten oder zur Kopplung vorgesehenen Zubehörgerät (2) und eine Installationsempfehlung zur Installation der ermittelten Nutzeranwendung (9) an den Nutzer ausgibt (14).

8. Verfahren nach einem der vorherigen Ansprüche,
wobei die Monitoringanwendung (5) die Kompatibilitätsinformationen (8) untersucht und ein noch nicht gekoppeltes Zubehörgerät (2) ermittelt, welches kompatibel zum Smartphone (1) und einer installierten oder zur Installation vorgesehenen Nutzeranwendung (9) ist, und eine Kopplungsempfehlung zur Kopplung des ermittelten Zubehörgeräts (2) an den Nutzer (3) ausgibt (14).

9. System umfassend ein Smartphone (1), auf dem eine Monitoringanwendung (5) zur Durchführung des Verfahrens gemäß einem der vorherigen Ansprüche 1 bis 8 ausgeführt wird, und eine für die Monitoringanwendung über das Internet zugängliche Datenbank mit Kompatibilitätsinformationen umfassend Angaben über die Kompatibilität von unterschiedlichen Modellen von Smartphones, Modellen von Zubehörgeräten und Nutzeranwendungen.

## Claims

1. Method for managing a pairing of a mobile electronic accessory device (2) with a smartphone (1) via a short-range wireless connection (6),
wherein a user application (9) is installed on the smartphone (1), which can access the paired accessory device (2) after pairing, wherein a monitoring application (5) runs in the smartphone (1), which is connected to a central database (4) implemented on a central server via a remote data connection (7) comprising the Internet, **characterized in that** the database comprises a multitude of compatibility information (8),
wherein compatibility information includes stored information on the compatibility of different models of accessory devices (1) models of accessory devices (3) and user applications (9),
wherein the monitoring application (5) accesses the compatibility information (8) to verify compatibility between the smartphone (1), an accessory device (3) that has been paired or is to be paired, and a user application (9) that has been installed or is to be installed.

2. Method according to the preceding claim,
wherein the monitoring application (5) is initiated to run a comparison with the compatibility information (8) if a pairing is initiated.

3. Method according to one of the preceding claims,
wherein the monitoring application (5) is initiated to run a comparison with compatibility information (8) if pairing fails.

4. Method according to Claim 3,
wherein, in the case of failure, an error report (13) comprising meta information of the smartphone (1) and the accessory device (2) is sent from the monitoring application (5) to the database.

5. Method according to Claim 3 or 4,
wherein instructions on troubleshooting the pairing failure is output to the user (3).

6. Method according to one of the preceding claims,
wherein the monitoring application (5) is initiated to run a comparison with the compatibility information (8) if an installation of a user application (9) is initiated on the smartphone (1).

7. Method according to one of the preceding claims,
wherein the monitoring application (5) examines the compatibility information (8) and detects a user application (9) that has not been installed yet, which is compatible with the smartphone (1) and the accessory device (2) that has been paired or has been provided to be paired, and outputs (14) an installation recommendation for installation the detected user application (9).

8. Method according to one of the previous claims,
wherein the monitoring application (5) examines 11 the compatibility information (8) and detects an accessory device (2) that has not yet been paired, which is compatible with the smartphone (1) and a user application (9) that has been installed or has been provided to be installed, and outputs (14) a pairing recommendation for pairing the accessory device (2) to the user (3).

9. System comprising a smartphone (1), on which a monitoring application (5) for carrying out the method in accordance with one of the preceding Claims 1 to 8 is run, and a database for the monitoring application that can be accessed via the Internet with compatibility information comprising information on the compatibility of various models of smartphones, models of accessory devices and user applications.

## Revendications

1. Procédé, destiné à gérer une connexion d'un accessoire électronique mobile (2) avec un smartphone (1) via une liaison courte distance (6) sans fil,
lors duquel on installe sur le smartphone (1) une application utilisateur (9), qui après la connexion peut avoir accès à l'accessoire (2) connecté, dans le smartphone (1) fonctionnant une application de supervision (5), qui via une liaison de télécommunication de données (7) comprenant Internet est en liaison avec une base de données (4) centralisée, réalisée sur un serveur centralisé, **caractérisé en ce que** la base de données comprend une pluralité d'informations de compatibilité (8),
dans une information de compatibilité étant sauvegardées des indications sur la compatibilité de différents modèles de smartphones (1), modèles d'accessoires (3) et applications utilisateurs (9),
l'application de supervision (5) accédant à l'information de compatibilité (8) pour vérifier la compatibilité entre le smartphone (1), un accessoire (3) connecté ou qui doit être connecté et une application utilisateur (9) installée ou qui doit être installée.

2. Procédé selon la revendication précédente,
l'application de supervision (5) étant incitée à procéder à un rapprochement avec les informations de compatibilité (8) lorsqu'une connexion est initiée.

3. Procédé selon l'une quelconque des revendications précédentes,
l'application de supervision (5) étant incitée à procéder à un rapprochement avec les informations de compatibilité (8) lorsqu'une connexion échoue.

4. Procédé selon la revendication 3,
en cas d'échec, un rapport d'erreurs (13) comprenant des méta-informations du smartphone (1) et de l'accessoire (2) étant envoyé par l'application de supervision (5) à la base de données.

5. Procédé selon la revendication 3 ou 4,
une instruction pour remédier à l'échec de connexion étant éditée à l'attention de l'utilisateur (3).

6. Procédé selon l'une quelconque des revendications précédentes,
l'application de supervision (5) étant incitée à procéder à un rapprochement avec les informations de compatibilité (8), lorsqu'une installation d'une application utilisateur (9) est initiée sur le smartphone (1).

7. Procédé selon l'une quelconque des revendications précédentes,
l'application de supervision (5) analysant les informations de compatibilité (8) et déterminant une application utilisateur (9) non encore installée, qui est compatible avec le smartphone (1) et l'accessoire (2) connecté ou prévu pour la connexion et éditant (14) à l'attention de l'utilisateur une recommandation d'installation pour l'installation de l'application utilisateur (9) déterminée.

8. Procédé selon l'une quelconque des revendications précédentes,
l'application de supervision (5) analysant les informations de compatibilité (8) et déterminant un accessoire (2) non encore connecté, lequel est compatible avec le smartphone (1) et avec une application utilisateur (9) installée ou prévue pour être installée, et éditant (14) à l'attention de l'utilisateur (3) une recommandation de connexion pour la connexion de l'accessoire (2) déterminé.

9. Système, comprenant un smartphone (1), sur lequel est exécutée une application de supervision (5) destinée à réaliser le procédé selon l'une quelconque des revendications 1 à 8 précédentes, et une base de données accessible par l'application de supervision via Internet avec des informations de compatibilité comprenant des indications sur la compatibilité de différents modèles de smartphones, modèles d'accessoires et applications utilisateurs.
